# EUROPÄISCHE PATENTANMELDUNG

(11) **EP 3 553 572 A1**
(43) Veröffentlichungstag der Anmeldung: **16.10.2019**
(21) Anmeldenummer: 18166868.2
(22) Anmeldetag: 11.04.2018
(51) Int. Cl.: G01W 1/17, G01N 25/62

(54) **FEUCHTTHERMOMETER UND VERFAHREN ZUR MESSUNG EINER LUFTTEMPERATUR**

(71) Anmelder: Weiss Umwelttechnik GmbH, 35447 Reiskirchen (DE)
(72) Erfinder: SCHLOSSER, Volker, 35305 Grünberg (DE)
(74) Vertreter: advotec.

(57) **Zusammenfassung**

Die Erfindung betrifft ein Feuchtthermometer (10) sowie ein Verfahren zur Messung einer Lufttemperatur, insbesondere Feuchttemperatur, wobei das Feuchtthermometer ein Sensorelement (11) und eine Befeuchtungsvorrichtung (12) zur Befeuchtung des Sensorelements umfasst, wobei die Befeuchtungsvorrichtung eine das Sensorelement zumindest abschnittsweise umgebende Hülle (18) aufweist, wobei die Hülle mittels einer Befeuchtungseinrichtung (13) der Befeuchtungsvorrichtung mit Flüssigkeit (15) benetzbar ist, wobei die Befeuchtungseinrichtung einen Behälter (14) zur Aufnahme von Flüssigkeit und einen Docht (16) umfasst, wobei der Docht in dem Behälter und an dem Sensorelement derart angeordnet ist, dass mittels des Dochts Flüssigkeit von dem Behälter zu der Hülle förderbar ist.

## Beschreibung

Die Erfindung betrifft ein Feuchtthermometer und ein Verfahren zur Messung einer Lufttemperatur, insbesondere Feuchttemperatur, wobei das Feuchtthermometer ein Sensorelement und eine Befeuchtungsvorrichtung zur Befeuchtung des Sensorelements umfasst, wobei die Befeuchtungsvorrichtung eine das Sensorelement zumindest abschnittsweise umgebende Hülle aufweist, wobei die Hülle mittels einer Befeuchtungseinrichtung der Befeuchtungsvorrichtung mit Flüssigkeit benetzbar ist. Weiter betrifft die Erfindung ein Psychrometer mit einem Feuchtthermometer sowie eine Prüfkammer mit einem Psychrometer.

Feuchtthermometer sind regelmäßig Bestandteil eines Psychrometers zur Bestimmung einer Luftfeuchtigkeit. Insbesondere Aspirationspsychrometer umfassen ein Thermometer beziehungsweise Trockenthermometer und ein Feuchtthermometer, dessen Sensorelement beziehungsweise dessen zur Temperaturmessung maßgeblicher Abschnitt mit einer mit Wasser benetzbaren Hülle umgeben ist. Dies kann beispielsweise eine Hülle aus Baumwolle oder Filz sein, die mit Wasser oder einer anderen geeigneten Flüssigkeit getränkt werden kann. In Abhängigkeit einer Luftfeuchtigkeit einer Umgebungsluft verdunstet die Flüssigkeit der Hülle schneller oder langsamer, wobei durch die Verdunstung das Sensorelement gekühlt wird und sich eine Temperaturdifferenz zwischen dem Feuchtthermometer und dem nicht mit einer Hülle umgebenden Thermometer ergibt. Aus der Temperaturdifferenz kann mit Hilfe von Tafeln oder Algorithmen eine relative Luftfeuchtigkeit sehr genau bestimmt werden.

Bei den bekannten Feuchtthermometern wird die Hülle an dem Sensorelement über eine Pumpe einer Befeuchtungseinrichtung zyklisch mit Wasser benetzt, wodurch die Hülle unterschiedlich stark mit Wasser getränkt wird. Diese Art der Benetzung hat Schwankungen bei der Verdunstung des Wassers und damit Messfehler des Feuchtthermometers zur Folge, die auch nicht durch eine Anpassung einer Dosiermenge an Wasser über die Pumpe behoben werden können.

Der vorliegenden Erfindung liegt daher die Aufgabe zugrunde, ein Feuchtthermometer sowie ein Verfahren zur Messung einer Lufttemperatur vorzuschlagen, mit dem die Lufttemperatur genauer messbar ist.

Diese Aufgabe wird durch ein Feuchtthermometer mit den Merkmalen des Anspruchs 1, ein Psychrometer mit den Merkmalen des Anspruchs 13, eine Prüfkammer mit den Merkmalen des Anspruchs 14 und ein Verfahren mit den Merkmalen des Anspruchs 15 gelöst.

Das erfindungsgemäße Feuchtthermometer dient zur Messung einer Lufttemperatur, insbesondere Feuchttemperatur, wobei das Feuchtthermometer ein Sensorelement und eine Befeuchtungsvorrichtung zur Befeuchtung des Sensorelements umfasst, wobei die Befeuchtungsvorrichtung eine das Sensorelement zumindest abschnittsweise umgebende Hülle aufweist, wobei die Hülle mittels einer Befeuchtungseinrichtung der Befeuchtungsvorrichtung mit Flüssigkeit benetzbar ist, wobei die Befeuchtungseinrichtung einen Behälter zur Aufnahme von Flüssigkeit und einen Docht umfasst, wobei der Docht in dem Behälter und an dem Sensorelement derart angeordnet ist, dass mittels des Dochts Flüssigkeit von dem Behälter zu der Hülle förderbar ist.

Die Hülle des Feuchtthermometers ist so beschaffen, dass sie das Sensorelement zumindest an dem für eine Temperaturmessung maßgeblichen Abschnitt umgibt und mit Flüssigkeit benetzt beziehungsweise getränkt werden kann. Der Behälter kann dann mit der Flüssigkeit, vorzugsweise Wasser, gefüllt sein, wobei der Docht dann so in dem Behälter angeordnet ist, dass der Docht in die Flüssigkeit eingetaucht ist. Weiter ist der Docht so angeordnet, dass er aus der Flüssigkeit heraus und zu dem Sensorelement hin geführt ist. Flüssigkeit in dem Docht kann dann mittels des Kapillareffekts innerhalb des Dochts von dem Behälter zu der Hülle gefördert werden. Der Docht steht daher so mit der Hülle in Verbindung, dass diese über den Docht mit der Flüssigkeit benetzt werden kann. Besonders vorteilhaft ist nun hier, dass keine zyklische Benetzung der Hülle mit Flüssigkeit mehr erfolgt, da entsprechend einer Verdampfungsrate der Flüssigkeit der Hülle über den Docht Flüssigkeit angesaugt und in angepasster Menge der Hülle zur Verfügung gestellt wird. Schwankungen und Messfehler des Feuchtthermometers können somit mit einfachen Mitteln behoben und eine Messgenauigkeit verbessert werden. Unter einem Sensorelement des Feuchtthermometers wird jede Art von Sensorelement verstanden, welches zur Messung einer Lufttemperatur geeignet ist. Das Sensorelement kann daher von einem Flüssigkeits-Glasthermometer beziehungsweise Ausdehnungsthermometer, einem Thermoelement, einem Widerstandsthermometer, einem Heißleiter oder Ähnlichem ausgebildet sein.

Vorteilhaft ist es, wenn der Docht mit einer Kapillarstruktur ausgebildet ist. Hier ist wesentlich, dass die Flüssigkeit so beschaffen ist, dass eine Kapillaraszension in Verbindung mit dem Material des Dochtes auftritt, das heißt die Flüssigkeit in dem Docht aufsteigt. Der Docht kann dann prinzipiell auch ein Rohr sein, welches einen besonders kleinen Innendurchmesser aufweist. Weiter kann das Material des Dochtes auch ein poröses Material oder ein Material mit einem großen Saugvermögen sein. Das Material des Dochtes kann auch aus Fasern bestehen, wie beispielsweise Filz. Weiter kann vorgesehen sein, dass die Hülle und der Docht aus dem gleichen Material ausgebildet sind. Der Docht kann auch aus einem Flechtgewebe ausgebildet sein. Das Flechtgewebe kann auch aus einem aus Fasern bestehenden Material ausgebildet sein, wie beispielsweise Baumwolle oder ein anderes textiles Material. Der Docht kann demnach in Art eines Seils oder Fadens ausgebildet sein, so dass sich der Behälter mit der Hülle besonders einfach verbinden lässt.

Demnach kann der Docht aus dem Behälter herausgeführt und mit der Hülle verbunden sein. Vorteilhaft ist es daher, wenn der Behälter benachbart dem Sensorelement angeordnet ist. Beispielsweise kann das Sensorelement mit dem Behälter fest verbunden sein. Der Behälter kann auch allseitig geschlossen, beispielsweise mit einem Deckel, ausgebildet sein, wobei der Docht dann durch eine Öffnung im Behälter herausgeführt sein kann. Die Verbindung mit der Hülle kann derart ausgebildet sein, dass der Docht mit der Hülle in einem direkten Berührungskontakt steht.

Der Docht kann auch die Hülle ausbilden. Der Docht kann dann in Art eines Schlauchs ausgebildet sein, der an einem Ende das Sensorelement umgibt und so an dem Sensorelement die Hülle ausbildet. Alternativ kann der Docht zur Ausbildung der Hülle auch um das Sensorelement herumgewickelt oder in einer anderen Art daran angeordnet sein. So kann dann auch sichergestellt werden, dass die Flüssigkeit direkt an das Sensorelement gefördert wird.

Der Behälter kann mit einem Flüssigkeitszulauf und einem Flüssigkeitsablauf ausgebildet sein. Über den Flüssigkeitszulauf kann dann fortwährend oder auch nur zyklisch Flüssigkeit in den Behälter eingefüllt werden, wobei der Flüssigkeitsablauf dazu dienen kann, ein Überlaufen des Behälters zu verhindern. Über den Flüssigkeitsablauf kann darüber hinaus der Behälter auch vollständig geleert werden. Dies kann dann erfolgen, wenn keine fortwährende Benetzung der Hülle gewünscht ist.

Vorteilhaft kann der Flüssigkeitsablauf oberhalb eines Bodens des Behälters angeordnet sein. Der Flüssigkeitsablauf kann dann in Art eines Überlaufs einen Flüssigkeitsspiegel konstant halten, unabhängig davon, wie viel Flüssigkeit in den Behälter gefördert wird. Mit einem konstanten Flüssigkeitsspiegel in dem Behälter ist stets eine gleichmäßige Benetzung des Dochts mit Flüssigkeit sichergestellt.

Besonders vorteilhaft ist es, wenn an den Flüssigkeitszulauf eine Pumpe der Befeuchtungseinrichtung zur Wasserversorgung angeschlossen ist. Prinzipiell kann anstelle einer Pumpe auch ein Ventil vorgesehen sein, über das, beispielsweise über einen Hauswasseranschluss, Flüssigkeit in den Behälter dosiert wird. Mittels der Pumpe kann Flüssigkeit zyklisch in den Behälter gefördert werden. Dazu kann eine konventionelle Pumpe, wie sie auch bei aus dem Stand der Technik bekannten Feuchtthermometern zur direkten Benetzung einer Hülle verwendet wird, eingesetzt werden. Ein vorhandenes Feuchtthermometer kann so einfach durch Hinzufügen des Behälters und des Dochtes umgerüstet werden.

Der Docht kann an einem Boden des Behälters fixiert sein. Dann kann zumindest immer sichergestellt werden, dass der Behälter bis zu dem Boden hin über den Docht entleert werden kann. Die Fixierung kann mit einem einfachen Draht oder Mittel zum Klemmen des Dochts im Bereich des Bodens erfolgen.

Das Sensorelement kann zumindest abschnittsweise stabförmig ausgebildet und relativ zu einer horizontalen Ebene geneigt angeordnet sein. Das Sensorelement kann beispielsweise eine Hülle aus Edelstahl mit einem freien Ende aufweisen, wobei an einem gegenüberliegenden Ende ein Kabel zur Übertragung und Erfassung von Messwerten herausgeführt sein kann. Das Sensorelement kann auch gebogen oder gekröpft ausgebildet sein. Durch die Neigung des Sensorelements relativ zu der horizontalen Ebene kann die Flüssigkeit an der Hülle bzw. dem Sensorelement auch ablaufen. Vorteilhaft kann daher der Docht in einem oberen Abschnitt des Sensorelements mit diesem verbunden sein. Die Neigung des Sensorelements relativ zu der horizontalen Ebene kann so beschaffen sein, dass das stabförmige Sensorelement in einem spitzen Winkel zu der horizontalen Ebene angeordnet ist.

Zwischen einem Boden des Behälters und der Hülle kann ein Niveauunterschied ausgebildet sein, derart, dass ein unteres Ende der Hülle unterhalb des Bodens angeordnet ist. Demnach kann eine hydrostatische Differenz zwischen dem unteren Ende der Hülle und einem Flüssigkeitsspiegel in dem Behälter ausgebildet werden, durch die ein Kapillareffekt nochmals begünstigt wird.

Das Feuchtthermometer kann eine Steuervorrichtung aufweisen, mittels der eine Flüssigkeitsversorgung des Behälters steuerbar ist. Die Steuervorrichtung kann Mittel zur Datenverarbeitung umfassen und nach einer Zeitvorgabe oder einfach vor jeder Messung mit dem Feuchtthermometer den Behälter mit der Flüssigkeit versorgen.

Das erfindungsgemäße Psychrometer zur Bestimmung einer Luftfeuchtigkeit umfasst ein Thermometer und ein erfindungsgemäßes Feuchtthermometer. Das Thermometer ist dann als ein sogenanntes Trockenthermometer ausgebildet und kann das baugleiche Sensorelement aufweisen, wie das Feuchtthermometer. Insbesondere handelt es sich dann um ein Aspirationspsychrometer. Über die mit dem Thermometer und dem Feuchtthermometer gemessenen Temperaturen kann eine Luftfeuchtigkeit leicht bestimmt werden.

Die erfindungsgemäße Prüfkammer zur Konditionierung von Luft umfasst einen gegenüber einer Umgebung verschließbaren und temperaturisolierten Prüfraum zur Aufnahme von Prüfgut, sowie ein im Prüfraum angeordnetes, erfindungsgemäßes Psychrometer. Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -20 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Zur Bestimmung und zur Regelung der Klimabedingungen ist es wesentlich, eine relative Luftfeuchte in den Prüfraum mit dem Psychrometer möglichst genau bestimmen zu können.

Bei dem erfindungsgemäßen Verfahren zur Messung einer Lufttemperatur, insbesondere Feuchttemperatur, wird ein Sensorelement eines Feuchtthermometers mittels einer Befeuchtungsvorrichtung des Feuchtthermometers befeuchtet, wobei eine das Sensorelement zumindest abschnittsweise umgebende Hülle der Befeuchtungsvorrichtung mittels einer Befeuchtungseinrichtung der Befeuchtungsvorrichtung mit Flüssigkeit benetzt wird, wobei mittels eines Dochts der Befeuchtungseinrichtung, der an dem Sensorelement und in Flüssigkeit in einem Behälter der Befeuchtungseinrichtung angeordnet ist, die Flüssigkeit von dem Behälter zu der Hülle gefördert wird. Zu den Vorteilen des erfindungsgemäßen Verfahrens wird auf die Vorteilsbeschreibung des erfindungsgemäßen Feuchtthermometers verwiesen.

Wenn das Feuchtthermometer in einem Prüfraum einer Prüfkammer zur Bestimmung einer relativen Luftfeuchtigkeit verwendet wird, kann dann eine Klimabedingung in dem Prüfraum besonders genau gemessen beziehungsweise geregelt werden. Die Messung erfolgt dann dadurch, dass der Behälter mit Flüssigkeit aufgefüllt wird und die Flüssigkeit über den Docht zu der Hülle des Sensorelements gefördert wird. Bei einem Wechsel der Klimabedingung, beispielsweise zu besonders niedrigen oder hohen Temperaturen, ist eine Messung der relativen Luftfeuchtigkeit mit dem Psychrometer gegebenenfalls nicht mehr möglich, so dass dann eine Nachspeisung von Flüssigkeit in dem Behälter gestoppt werden kann und der Docht den Behälter leer saugt, so dass sich im Behälter keine Flüssigkeit mehr befindet, bevor der Wechsel der Klimabedingungen vollzogen ist.

Vorteilhaft ist es, wenn die Flüssigkeit die Hülle kontinuierlich durchströmt und an einem unteren Ende der Hülle abfließt oder abtropft. Dadurch kann nicht verdunstete Flüssigkeit aus der Hülle wieder ausgeleitet werden, und eine Anreicherung von chemischen Bestandteilen der Flüssigkeit oder der umgebenden Luft wird verhindert. Auch kann die Flüssigkeit dann in einer Konzentration in der Hülle vorliegen, die eine Kapillarwirkung der Hülle und/oder des Dochts sicherstellt. Der Docht und/oder die Hülle können so vergleichsweise lange verwendet werden. Die kontinuierliche Durchströmung kann beispielsweise durch einen Niveauunterschied zwischen dem Ende der Hülle und dem Behälter bewirkt werden.

Weitere Ausführungsformen des Verfahrens ergeben sich aus der Merkmalsbeschreibung der auf den Vorrichtungsanspruch 1 rückbezogenen Unteransprüche.

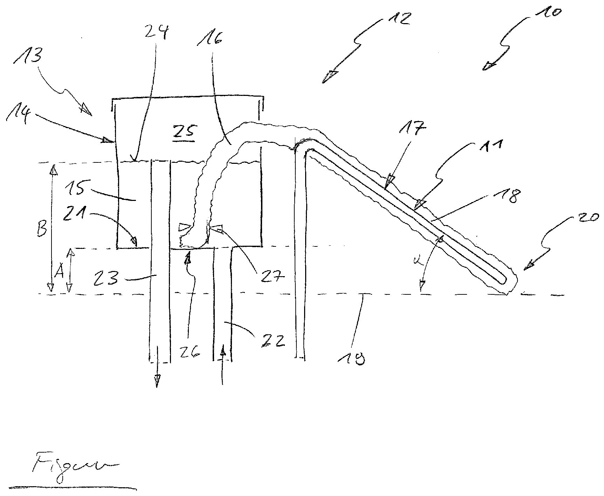

Nachfolgend wird eine bevorzugte Ausführungsform der Erfindung unter Bezugnahme auf die beigefügte Zeichnung näher erläutert. Die **Figur** zeigt eine schematische Schnittdarstellung eines Feuchtthermometers 10 mit einem Sensorelement 11 und einer Befeuchtungsvorrichtung 12 zur Befeuchtung des Sensorelements 11. Eine Befeuchtungseinrichtung 13 der Befeuchtungsvorrichtung 12 umfasst einen Behälter 14, der mit einer Flüssigkeit 15, wie beispielsweise Wasser, gefüllt ist. In die Flüssigkeit 15 ist ein Docht 16 der Befeuchtungseinrichtung 13 getaucht, und der Docht 16 ist aus dem Behälter 14 herausgeführt und mit dem Sensorelement 11 verbunden. Der Docht 16 ist über einen stabförmigen Abschnitt 17 des Sensorelements angeordnet und bildet so an dem stabförmigen Abschnitt 17 eine Hülle 18 der Befeuchtungsvorrichtung 12, die das Sensorelement 11 umgibt, aus.

Das Sensorelement 11 ist weiter gekröpft ausgebildet, so dass der stabförmige Abschnitt 17 in einem Winkel α relativ zu einer horizontalen Ebene 19 angeordnet ist. Weiter ist das Sensorelement 11 so angeordnet, dass ein unteres Ende 20 der Hülle 18 bzw. des Abschnitts 17 sich mit einem Niveauunterschied A unterhalb eines Bodens 21 des Behälters 14 befindet. Der Behälter 14 weist einen Flüssigkeitszulauf 22 und einen Flüssigkeitsablauf 23 auf, wobei der Flüssigkeitsablauf so beschaffen ist, dass stets ein konstanter Flüssigkeitsspiegel 24 ausgebildet wird, wenn über den Flüssigkeitszulauf 22 Flüssigkeit 15 in einen Behälterinnenraum 25, beispielsweise mittels einer hier nicht dargestellten Pumpe, gefördert wird. Zwischen dem Flüssigkeitsspiegel 24 und dem unteren Ende 20 ist dann ein Niveauunterschied B ausgebildet. Weiter ist hier ein Ende 26 des Dochts 16 im Bereich des Bodens 21 mittels eines Drahts 27 fixiert, so dass bei Ausbleiben einer Flüssigkeitszufuhr über den Flüssigkeitszulauf 22 der Docht 16 den Behälterinnenraum 25 vollständig leer saugen kann. Der Docht 16 besteht aus einem hier nicht näher dargestellten Material mit einer Kapillarstruktur, so dass die Flüssigkeit 15 in dem Docht 16 aufsteigen und an dem Abschnitt 17 in dem Docht 16 bzw. der Hülle 18 fließen kann, so dass die Hülle 18 kontinuierlich mit Flüssigkeit 15 benetzt wird.

## Patentansprüche

1. Feuchtthermometer (10) zur Messung einer Lufttemperatur, insbesondere Feuchttemperatur, wobei das Feuchtthermometer ein Sensorelement (11) und eine Befeuchtungsvorrichtung (12) zur Befeuchtung des Sensorelements umfasst, wobei die Befeuchtungsvorrichtung eine das Sensorelement zumindest abschnittsweise umgebende Hülle (18) aufweist, wobei die Hülle mittels einer Befeuchtungseinrichtung (13) der Befeuchtungsvorrichtung mit Flüssigkeit (15) benetzbar ist,
**dadurch gekennzeichnet,**
**dass** die Befeuchtungseinrichtung einen Behälter (14) zur Aufnahme von Flüssigkeit und einen Docht (16) umfasst, wobei der Docht in dem Behälter und an dem Sensorelement derart angeordnet ist, dass mittels des Dochts Flüssigkeit von dem Behälter zu der Hülle förderbar ist.

2. Feuchtthermometer nach Anspruch 1,
**dadurch gekennzeichnet,**
**dass** der Docht (16) mit einer Kapillarstruktur ausgebildet ist.

3. Feuchtthermometer nach Anspruch 1 oder 2,
**dadurch gekennzeichnet,**
**dass** der Docht (16) aus einem Flechtgewebe ausgebildet ist.

4. Feuchtthermometer nach einem der vorangehenden Ansprüche,
**dadurch gekennzeichnet,**
**dass** der Docht (16) aus dem Behälter (14) herausgeführt und mit der Hülle (18) verbunden ist.

5. Feuchtthermometer nach einem der vorangehenden Ansprüche,
**dadurch gekennzeichnet,**
**dass** der Docht (16) die Hülle (18) ausbildet.

6. Feuchtthermometer nach einem der vorangehenden Ansprüche,
**dadurch gekennzeichnet,**
**dass** der Behälter (14) mit einem Flüssigkeitszulauf (22) und einem Flüssigkeitsablauf (23) ausgebildet ist.

7. Feuchtthermometer nach Anspruch 6,
**dadurch gekennzeichnet,**
**dass** der Flüssigkeitsablauf (23) oberhalb eines Bodens (21) des Behälters (14) angeordnet ist.

8. Feuchtthermometer nach Anspruch 6 oder 7,
**dadurch gekennzeichnet,**
**dass** an den Flüssigkeitszulauf (22) eine Pumpe der Befeuchtungseinrichtung (13) zur Flüssigkeitsversorgung angeschlossen ist.

9. Feuchtthermometer nach einem der vorangehenden Ansprüche,
**dadurch gekennzeichnet,**
**dass** der Docht (16) an einem Boden (21) des Behälters (14) fixiert ist.

10. Feuchtthermometer nach einem der vorangehenden Ansprüche,
**dadurch gekennzeichnet,**
**dass** das Sensorelement (11) zumindest abschnittsweise stabförmig ausgebildet und relativ zu einer horizontalen Ebene (19) geneigt angeordnet ist.

11. Feuchtthermometer nach einem der vorangehenden Ansprüche,
**dadurch gekennzeichnet,**
**dass** zwischen einem Boden (21) des Behälters (14) und der Hülle (18) ein Niveauunterschied (A) ausgebildet ist, derart, dass ein unteres Ende (20) der Hülle unterhalb des Bodens angeordnet ist.

12. Feuchtthermometer nach einem der vorangehenden Ansprüche,
**dadurch gekennzeichnet,**
**dass** das Feuchtthermometer (11) eine Steuervorrichtung aufweist, mittels der eine Flüssigkeitsversorgung des Behälters (14) steuerbar ist.

13. Psychrometer zur Bestimmung einer Luftfeuchtigkeit, umfassend ein Thermometer und ein Feuchtthermometer (10) nach einem der vorangehenden Ansprüche.

14. Prüfkammer zur Konditionierung von Luft, umfassend einen gegenüber einer Umgebung verschließbaren und temperaturisolierten Prüfraum zur Aufnahme von Prüfgut, sowie ein im Prüfraum angeordnetes Psychrometer nach Anspruch 13.

15. Verfahren zur Messung einer Lufttemperatur, insbesondere Feuchttemperatur, wobei ein Sensorelement (11) eines Feuchtthermometers (10) mittels einer Befeuchtungsvorrichtung (13) des Feuchtthermometers befeuchtet wird, wobei eine das Sensorelement zumindest abschnittsweise umgebende Hülle (18) der Befeuchtungsvorrichtung mittels einer Befeuchtungseinrichtung (13) der Befeuchtungsvorrichtung mit Flüssigkeit (15) benetzt wird,
**dadurch gekennzeichnet,**
**dass** mittels eines Dochts (16) der Befeuchtungseinrichtung, der an dem Sensorelement und in Flüssigkeit in einen Behälter (14) der Befeuchtungseinrichtung angeordnet ist, die Flüssigkeit von dem Behälter zu der Hülle gefördert wird.

16. Verfahren nach Anspruch 15,
**dadurch gekennzeichnet,**
**dass** die Flüssigkeit die Hülle (18) kontinuierlich durchströmt und an einem unteren Ende (20) der Hülle abfließt oder abtropft.
